**Europäisches Patentamt**

**European Patent Office**

**Office européen des brevets**

(11) Veröffentlichungsnummer: **0 218 800 B1**

# EUROPÄISCHE PATENTSCHRIFT

(45) Veröffentlichungstag der Patentschrift:
**02.08.89**

(21) Anmeldenummer: **86108889.6**

(22) Anmeldetag: **30.06.86**

(51) Int. Cl.⁴: **H01M 10/16, H01M 10/12**

(54) **Elektrodensatz zum Einbau in eine Akkumulatorenzelle.**

(30) Priorität: **20.08.85 DE 3529724**

(43) Veröffentlichungstag der Anmeldung:
**22.04.87 Patentblatt 87/17**

(45) Bekanntmachung des Hinweises auf die Patenterteilung:
**02.08.89 Patentblatt 89/31**

(84) Benannte Vertragsstaaten:
**AT DE FR GB SE**

(56) Entgegenhaltungen:
**DE-A- 1 571 962**
**DE-A- 2 646 711**
**DE-C- 68 465**

(73) Patentinhaber: **VARTA Batterie Aktiengesellschaft, Am Leineufer 51, D-3000 Hannover 21(DE)**

(72) Erfinder: **Kallup, Bernhard, Dr. Dipl.-Ing., Bismarckallee 48, D-8750 Aschaffenburg(DE)**

(74) Vertreter: **Kaiser, Dieter Ralf, Dipl.-Ing., Gundelhardtstrasse 72 Postfach 16 20, D-6233 Kelkheim/Ts.(DE)**

## Beschreibung

Die Erfindung betrifft einen Elektrodensatz für eine Akkumulatorenzelle, bestehend aus positiven und negativen Elektrodenplatten sowie zwischengelegten Separatoren, wobei die unteren Ränder der Elektrodenplatten mit Füßchen versehen sind, mit denen die Platten auf Stützleisten am Boden des Zellgefäßes aufstehen.

Eine solche Elektrodenanordnung ist bei Bleiakkumulatoren, insbesondere bei Starterbatterien, üblich. Der Elektrodensatz einer jeden Zelle weist dabei in der Regel nicht jeweils gleichviele Elektroden beider Polaritäten auf, sondern die Anzahl der negativen Platten ist gegenüber den positiven Platten um 1 erhöht. Beispielsweise enthält der Elektrodensatz 6 positive und 7 negative Platten. Zur elektrischen Isolierung ist jede positive Elektrode gegen ihre beiden Nachbarn durch je einen Separator abgedeckt.

Um die Kontaminierung der Elektroden mit dem nach und nach abgeschlammten eigenen Aktivmaterial zu vermeiden, ist der Boden des Zellgefäßes mit Leisten von prismatischem Profil überzogen, auf denen die Platten mittels Füßchen, die den unteren Plattenrändern angeformt sind, aufstehen, so daß der Schlamm in dem unterhalb des Elektrodensatzes gebildeten Freiraum problemlos aufgefangen wird.

Im Interesse der Kurzschlußfestigkeit des Elektrodensatzes sind die Separatorflächen etwas größer dimensioniert als die Flächen der Elektroden. Man erzielt dadurch einen Einbauzustand in der fertigen Akkumulatorenzelle, bei dem einmal die positiven und negativen Elektroden fluchtend zueinander ausgerichtet sind, d.h. daß sich die Elektrodenplatten in Richtung der Flächennormale gesehen genau miteinander decken, und bei dem zum anderen die Separatoren so zu den Elektroden orientiert sind, daß sich um sie herum ein überstehender Rand der Separatoren ergibt, der überall die gleiche Breite besitzt.

Wie man der DE-OS 26 46 711, insbesondere Figur 2, entnehmen kann, wird der Überstand des Separators über den unteren Plattenrand durch die Füßchen 4, die auf den Stützleisten 9a bzw. 9b aufstehen, gerade überbrückt.

In der Praxis hat sich nun gezeigt, daß die positiven Elektrodenplatten infolge Korrosion einem beträchtlichen Gitterwachstum unterliegen können, welches sich in einer Ausweitung der Elektrodenfläche äußert und insbesondere durch Ausbuchtung der Plattenränder nach außen sichtbar wird. Das an sich nach allen Richtungen der Flächenebene hin gleichmäßige Wachstum führt dabei zu einer einseitigen Verschiebung aller positiven Platten des Elektrodensatzes nach oben, weil die Abstützung der Platten auf den Bodenleisten des Zellgefäßes in der bekannten Art ein gleichzeitiges Ausweichen des Gitters nach unten verhindert. Die gegenseitige Verlagerung der positiven und negativen Platten kann die Funktionsfähigkeit des Akkumulators ernsthaft gefährden.

Der Erfindung liegt daher die Aufgabe zugrunde, Maßnahmen anzugeben, mit denen die dargelegte einseitige Verschiebung der positiven Elektroden eines Plattensatzes im Zuge des korrosionsbedingten Gitterwachstums auf einfache Weise unterbunden werden kann.

Die Aufgabe wird erfindungsgemäß durch einen mit den Merkmalen des Anspruchs 1 ausgestatteten Elektrodensatzes gelöst.

Ferner betrifft die Erfindung eine Akkumulatorenzelle nach Anspruch 4.

Der besondere Vorteil der Erfindung liegt darin, daß dem offensichtlichen Mangel eines Elektrodenpakets üblicher Bauart und Lagefixierung im Zellengefäß lediglich durch geometrische Korrekturen am bekannten Plattenumriß sowie am Bodenprofil des Zellengefäßes abgeholfen werden kann. Die Korrekturen bestehen erfindungsgemäß darin, daß die beiden Füßchen einer jeden positiven Platte eine größere Distanz zueinander aufweisen als diejenigen der negativen Platten und daß die Füßchen der positiven Platten stets näher an den Außenseiten der Platten liegen als bei den Negativen. Vorzugsweise liegen die Füßchen einer jeden Platte zum Plattenumriß geometrisch. An der bisherigen Herstellungsmethode und dem werkzeugtechnischen Aufwand für die erfindungsgemäßen Platten ändert sich dagegen nichts.

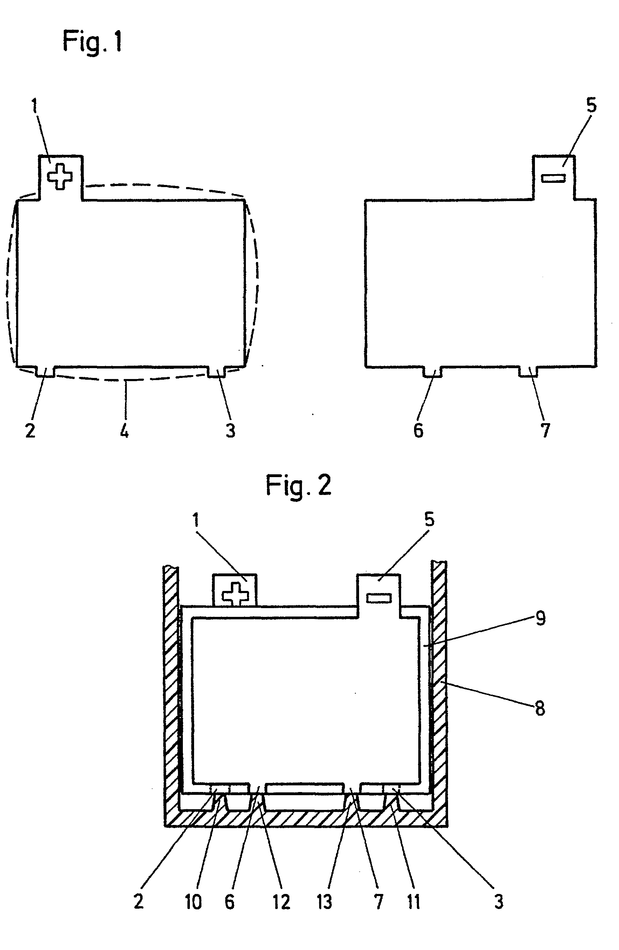

Anhand der Figuren 1 und 2 wird die Erfindung näher erläutert.

Figur 1 zeigt schematisch eine positive und eine negative Elektrodenplatte mit erfindungsgemäß angeordneten Füßchen.

Figur 2 zeigt schematisch ein Zellgefäß mit fertig eingebauten Elektrodensatz in der erfindungsgemäßen geometrischen Auslegung.

Wie Figur 1 verdeutlicht, geben die weit auseinanderstehenden Füßchen 2, 3 der positiven Elektrode 1 beim Gitterwachstum, welches durch eine Vergrösserung des Plattenumrisses entsprechend der gestrichelten Linie 4 angedeutet ist, genügend Raum für eine ungehinderte vertikale Flächenausdehnung auch nach unten. Bei den sonst asymmetrisch auf den unteren Plattenrand verteilten Füßchen befindet sich zumindest das eine nahe der Randmitte und damit in der Zone stärksten Wachstums. Durch den Gegendruck der zugehörigen Stützleiste wird dieses Wachstum jedoch in eine Verschiebung der Platte nach oben umgekehrt. Dies kann zu einer derartigen Fehlordnung der Platten führen, bei welcher eine einwandfreie Zellenfuktion nicht mehr gewährleistet ist.

Es hat sich als günstig erwiesen, die Füßchen auf eine Distanz von mindestens 75% der gesamten Plattenbreite auseinanderzurücken. Vorzugsweise sollte ihre Distanz 90 bis 100% der Plattenbreite betragen.

Die Distanz der Füßchen bei den negativen Platten beträgt demgegenüber maximal ca. 60% der Plattenbreite. Auf diese Weise ist ausgeschlossen, daß sich bei stirnseitiger Draufsicht auf den Elektrodensatz Füßchen von Platten der einen Polarität mit Füßchen der anderen Polarität überlappen.

Innerhalb der für die Füßchen der positiven Elektrode erfindungsgemäß vorgesehenen Distanzbreite sind die Füßchen 6, 7 der negativen Elektrode 5 an deren unterem Rand angeordnet. Die somit mehr zu ihrer Mitte gerückte Abstützung der negativen Elektrode ist möglich, weil sie von keiner oder nur unerheblichen Gitterkorrosion betroffen ist und ein Gitterwachstum mit den bei der Positiven genannten Folgen entfällt.

Gemäß Figur 2, welche ein Zellgefäß 8 in der Form eines Blockkastens mit einem fertig eingebauten Elektrodensatz aus erfindungsgemäß gestalteten positiven und negativen Elektroden und zwischenliegenden Separatoren 9 von der Stirnseite her zeigt, sind die parallelen Stützleisten 10, 11 für die Füßchen 2, 3 der positiven Elektrode 1 (durch den Überstand des Separators verdeckt) und die parallelen Stützleisten 12, 13 für die Füßchen 6, 7 der negativen Elektrode 5 in ihren gegenseitigen Abständen den Abständen der Füßchen angepaßt. Die positiven und negativen Elektroden werden somit getrennt voneinander über dem Boden des Zellgefäßes, nämlich durch individuelle Stützleisten bzw. -rippen von prismatischem Querschnitt fixiert. Die Zuordnung zweier Stützleisten zu den positiven Platten und die Zuordnung zweier davon unabhängiger Stützleisten zu den negativen Platten ist von zusätzlichem Vorteil, weil dadurch Kriechströme zwischen den beiden Polaritäten oder Kurzschlüsse, die infolge Ablagerung von Masseteilchen auf einer gemeinsamen Stützleiste entstehen können, wirksam verhindert werden.

Das Wesentliche der Erfindung besteht jedoch darin, daß die Abstützung der positiven Elektrodenplatten am Boden des Zellgefäßes mehr im Bereich ihrer Enden, die Abstützung der negativen Elektrodenplatten dagegen mehr in ihrem mittleren Bereich erfolgt. Durch den großen Abstand der Fixierungspunkte bei den positiven Platten können diese einem erheblichen Flächenwachstum unterliegen, bevor dieses die Platten zu einer einseitigen Verschiebung gegenüber den Negativen zwingt.

## Patentansprüche

1. Elektrodensatz für eine Akkumulatorenzelle, bestehend aus positiven und negativen Elektrodenplatten sowie zwischengelegten Separatoren, wobei die unteren Ränder der Elektrodenplatten mit Füßchen versehen sind, mit denen die Platten auf Stützleisten am Boden des Zellgefäßes aufstehen, dadurch gekennzeichnet, daß die Füßchen der positiven Platten eine größere Distanz zueinander besitzen und dabei stets näher an den Außenseiten der Platten liegen als die Füßchen der negativen Platten.

2. Elektrodensatz nach Anspruch 1, dadurch gekennzeichnet, daß die Distanz der Füßchen der positiven Platten mindestens 75% der gesamten Plattenbreite, vorzugsweise 90 bis 100% der Plattenbreite beträgt.

3. Elektrodensatz nach den Ansprüchen 1 und 2, dadurch gekennzeichnet, daß die maximale Distanz der Füßchen bei den negativen Platten etwa 60% der Plattenbreite beträgt.

4. Akkumulatorenzelle, die in einem Blockkastengehäuse einen aus positiven und negativen Elektroden sowie zwischengelegten Separatoren bestehenden Elektrodensatz enthält, wobei die unteren Ränder der Elektrodenplatten mit Füßchen versehen sind, welche auf Stützleisten am Boden des Gehäuses aufstehen, dadurch gekennzeichnet, daß die Füßchen der positiven Platten eine größere Distanz zueinander besitzen und stets näher an den Außenseiten der Platten liegen als die Füßchen der negativen Platten, und daß der Blockkasten parallellaufende Bodenleisten (10, 11, 12, 13) besitzt, deren gegenseitige Abstände den Distanzen der Füßchen (2, 3) an den positiven Platten (1) und den Füßchen (6, 7) an den negativen Platten (5) angepaßt sind, so daß alle positiven Elektroden (1) und alle negativen Elektroden (5) jeweils für sich durch individuelle Bodenleisten (10, 11, 12, 13) abgestützt sind.

## Claims

1. Electrode assembly for a storage battery cell, comprising positive and negative electrode plates and interposed separators, the lower edges of the electrode plates being provided with feet, with which the plates stand on supporting ridges on the bottom of the cell container, characterized in that the feet of the positive plates are at a greater distance from one another, and thereby always lie nearer to the outsides of the plates, than the feet of the negative plates.

2. Electrode assembly according to Claim 1, characterized in that the distance of the feet of the positive plates amounts to at least 75% of the total plate width, preferably 90 to 100% of the plate width.

3. Electrode assembly according to Claims 1 and 2, characterized in that for the negative plates the maximum distance of the feet amounts to approximately 60% of the plate width.

4. Storage battery cell, which contains in a case housing an electrode assembly comprising positive and negative electrodes and interposed separators, the lower edges of the electrode plates being provided with feet, which stand on supporting ridges on the bottom of the housing, characterized in that the feet of the positive plates are at a greater distance from one another and always lie nearer to the outsides of the plates than the feet of the negative plates, and in that the case has bottom ridges (10, 11, 12, 13), which extend parallel and whose mutual spacings are adapted to the distances of the feet (2, 3) at the positive plates (1) and the feet (6, 7) at the negative plates (5), so that all positive electrodes (1) and all negative electrodes (5) are, in each case, supported by bottom ridges (10, 11, 12, 13) which are individual per se.

## Revendications

1. Bloc d'électrodes pour une cellule d'accumulateur, constitué de plaques d'électrodes positives et négatives, ainsi que de séparateurs dans lequel les bords inférieurs des plaques d'électrodes sont munis de pieds, avec lesquels les plaques sont posées verticalement sur des bandes d'appui sur le fond du boîtier de la cellule, caractérisé en ce que les pieds des plaques positives présentent un espacement entre eux plus grand que celui des pieds des plaques négatives et, de ce fait, sont disposés toujours plus près des bords extérieurs des plaques que ceux des plaques négatives.

2. Bloc d'électrodes selon la revendication 1, caractérisé en ce que l'espacement des pieds des plaques positives s'élève au moins à 75% de la largeur totale des plaques et, de préférence, de 75 à 100%.

3. Bloc d'électrodes selon les revendications 1 et 2, caractérisé en ce que l'espacement maximal des pieds des plaques négatives s'élève à environ 60% de la largeur des plaques.

4.) Cellule d'accumulateur qui contient dans un boîtier un bloc d'électrodes constitué d'électrodes positives et négatives ainsi que de séparateurs intercalés, dans laquelle les bords inférieurs des plaques d'électrodes sont munis de pieds, lesquels reposent verticalement sur des bandes d'appui sur le fond du boîtier, caractérisée en ce que les pieds des plaques positives présentent un espacement entre-eux plus grand que celui des pieds des plaques négatives et, de ce fait, sont disposés toujours plus près des bords extérieurs des plaques que ceux des plaques négatives et en ce que le boîtier possède des bandes (10, 11, 12, 13) disposées parallèlement sur le fond, et dont les espacements entre elles (10, 11, 12, 13) sont ajustés respectivement à l'espacement des pieds (2, 3) des plaques positives (1) et à l'espacement des pieds (6, 7) des plaques négatives (5), de sorte que toutes les électrodes positives (1) et toutes les électrodes négatives (5) sont chaque fois soutenues par des bandes individuelles (10, 11, 12, 13) sur le fond.

## Fig. 1

## Fig. 2